# EUROPEAN PATENT APPLICATION

(11) **EP 4 804 302 A1**
(43) Date of publication of application: **09.09.2026**
(21) Application number: 25731404.7
(22) Date of filing: 23.01.2025
(51) Int. Cl.: H01M 50/136, H01M 50/342, H01M 50/105, H01M 10/052, H01M 50/129

(54) **BATTERY CELL, BATTERY APPARATUS, AND ELECTRIC DEVICE**

(71) Applicant: Contemporary Amperex Technology Co., Limited, Jiaocheng District Ningde Fujian 352100 (CN)
(72) Inventor: QIAN, Ou, Ningde, Fujian 352100 (CN); LI, Yao, Ningde, Fujian 352100 (CN); JIANG, Shixin, Ningde, Fujian 352100 (CN); CAI, Jiajin, Ningde, Fujian 352100 (CN)
(74) Representative: Gong, Jinping
(86) International application number: PCT/CN2025/074366
(87) International publication number: WO 2026/156618

(57) **Abstract**

A battery cell (100), a battery apparatus (200), and an electric device (300) are provided. The battery cell (100) includes a flexible housing (10) and an electrode assembly (20). The electrode assembly (20) is disposed in the flexible housing (10), where the flexible housing (10) has a side surface (11) opposite a large surface of the electrode assembly (20), and a circumferential surface (12) avoiding the large surface, the circumferential surface (12) and the side surface (11) are connected along circumference of the electrode assembly (20), and at least the circumferential surface (12) is provided with a pressure relief region (121).

## Description

### TECHNICAL FIELD

This application relates to the field of battery technologies, and in particular, to a battery cell, a battery apparatus, and an electric device.

### BACKGROUND

In related technologies, pouch battery cells face challenges in achieving directional pressure relief, which affects further improvement of the reliability of pouch battery apparatuses.

### SUMMARY

This application is intended to solve at least one of the foregoing technical problems in the prior art. Therefore, a purpose of this application is to disclose a battery cell, a battery apparatus, and an electric device, achieving higher reliability of the battery cell.

This application provides a battery cell. The battery cell includes a flexible housing and an electrode assembly. The electrode assembly is disposed in the flexible housing, where the flexible housing has a side surface opposite a large surface of the electrode assembly, and a circumferential surface avoiding the large surface, the circumferential surface and the side surface are connected along circumference of the electrode assembly, and at least the circumferential surface is provided with a pressure relief region.

In the battery cell in this embodiment of this application, the flexible housing is provided with the pressure relief region to realize directional pressure relief of the battery cell during thermal runaway, realizing ordered discharge of high-temperature gas and fire flow within the battery cell, thereby reducing damage to an insulating interface of a battery apparatus, reducing secondary damage, and improving the reliability of the battery cell and even the reliability of the battery apparatus.

According to some embodiments of this application, the pressure relief region includes a weak portion disposed on the circumferential surface, and the weak portion is configured to rupture for pressure relief when the pressure within the flexible housing exceeds a pressure threshold.

According to some embodiments of this application, a film material of the flexible housing is configured as a stacked multilayer film structure and at least includes a metal barrier layer, where the weak portion is formed on the metal barrier layer, or the weak portion extends and penetrates through at least part of the metal barrier layer.

According to some embodiments of this application, the weak portion is configured as an indentation, and the indentation penetrates through at least part of the metal barrier layer.

According to some embodiments of this application, a contour of the indentation has one or more of a circular shape, an oval shape, a rectangular shape, a linear shape, or a Z shape.

According to some embodiments of this application, multiple indentations are provided, and the multiple indentations are spaced apart on the circumferential surface or the side surface of the flexible housing.

According to some embodiments of this application, a thickness of the film material of the flexible housing is D1, and a depth of the indentation is D2, satisfying 1/3≤D1/D2≤2/3.

According to some embodiments of this application, the film material of the flexible housing includes: a metal barrier layer, a first plasticized barrier layer located on a side of the metal barrier layer facing the electrode assembly, and a second plasticized barrier layer located on a side away from the electrode assembly. The metal barrier layer includes a body region and a weak region corresponding to the weak portion, and the weak region and the body region are made of different materials.

According to some embodiments of this application, the film material of the flexible housing includes: a metal barrier layer, a first plasticized barrier layer located on a side of the metal barrier layer facing the electrode assembly, and a second plasticized barrier layer located on a side away from the electrode assembly. The metal barrier layer includes a body region and a weak region corresponding to the weak portion, and a thickness of the weak region is less than a thickness of the body region.

According to some embodiments of this application, the film material further includes: a filler layer, where the filler layer is located between the first plasticized barrier layer and the metal barrier layer and fills the weak region, and/or the filler layer is located between the second plasticized barrier layer and the metal barrier layer and configured to fill the weak region.

According to some embodiments of this application, the battery cell is any one of a lithium iron phosphate battery cell, a ternary lithium battery cell, and a solid-state battery cell.

According to some embodiments of this application, when the battery cell is a lithium iron phosphate battery cell, a ratio of the amount of a positive electrode active material, a positive electrode binder, and a positive electrode conductive agent in a positive electrode material of the battery cell is 96:(1-3):(1-3); and when the battery cell is a ternary lithium battery cell, the ratio of the amount of the positive electrode active material, the positive electrode binder, and the positive electrode conductive agent in the positive electrode material of the battery cell is 96:(2-3):(1-2).

This application provides a battery apparatus including: a box and at least one battery pack. The battery pack includes: at least one battery cell according to any one of the foregoing embodiments and a covering shell, and at least one side surface of the covering shell is provided with a pressure relief portion.

According to the battery apparatus in this embodiment of this application, the covering shell is provided with the pressure relief portion that cooperates with the pressure relief region, so that when the battery cell experiences thermal runaway, high-temperature gas and fire flow discharged through the pressure relief region (the weak portion) can be further released outwards through the pressure relief portion, achieving directional discharge of the high-temperature gas and fire flow through the cooperation of the weak portion and the pressure relief portion, thereby improving the reliability of the battery apparatus.

According to some embodiments of this application, the covering shell includes a first plate and second plates located on both sides of the first plate. The pressure relief portion is formed on the first plate, and the pressure relief region and the pressure relief portion are at least partially opposite each other.

According to some embodiments of this application, the second plates are opposite the side surface, and a contour area of a projection of the second plate facing the side surface of the flexible housing is less than or equal to an area of the side surface.

According to some embodiments of this application, the first plate is spaced apart from a side of the circumferential surface with the weak portion, to define an exhaust passage.

According to some embodiments of this application, the first plate is configured as a flat plate or an arc-shaped plate.

According to some embodiments of this application, multiple pressure relief portions are provided, and the multiple pressure relief portions are spaced apart in a length direction and/or width direction of the first plate.

According to some embodiments of this application, the covering shell is configured as an aluminum shell or a stainless steel shell.

According to some embodiments of this application, the box has a bottom plate, and the bottom plate is connected to the battery cell through an adhesive layer.

According to some embodiments of this application, the bottom plate includes a cold plate, and the adhesive layer is located between the cold plate and multiple battery cells.

According to some embodiments of this application, the adhesive layer includes: an adhesive layer body and an adhesive overflow portion, where the adhesive overflow portion is located on a side of the adhesive layer body facing the multiple battery cells and between adjacent battery cells and/or between the battery cells and the second plates.

This application discloses an electric device, including the battery apparatus according to the foregoing embodiments.

According to some embodiments of this application, the electric device is a vehicle.

According to some embodiments of this application, the battery apparatus is integrated into a chassis of the vehicle, and a top plate of the box participates in defining a vehicle floor.

Additional aspects and advantages of this application will be given in part in the following description, part of which will become apparent from the following description or from the practice of this application.

### BRIEF DESCRIPTION OF DRAWINGS

The above and/or additional aspects and advantages of this application will become obvious and easy to understand from the description of the embodiments with reference to the following accompanying drawings.
FIG. 1 is a schematic diagram of a battery apparatus according to an embodiment of this application;
FIG. 2 is a schematic diagram of an electric device according to an embodiment of this application;
FIG. 3 is a schematic diagram (a first indentation) of a battery cell according to an embodiment of this application;
FIG. 4 is a schematic top view of a battery cell in FIG. 3;
FIG. 5 is a schematic diagram (a second indentation) of a battery cell according to an embodiment of this application;
FIG. 6 is a schematic top view of a battery cell in FIG. 5;
FIG. 7 is a schematic diagram (a third indentation) of a battery cell according to an embodiment of this application;
FIG. 8 is a schematic top view of a battery cell in FIG. 7;
FIG. 9 is a schematic diagram of a film material of a flexible housing of a battery cell according to an embodiment of this application (an indentation extends to a metal barrier layer);
FIG. 10 is a schematic diagram of a film material of a flexible housing of a battery cell according to an embodiment of this application (a body region and a weak region are made of different materials);
FIG. 11 is a schematic diagram of a film material of a flexible housing of a battery cell according to an embodiment of this application (a body region and a weak region are different in thickness);
FIG. 12 is a schematic diagram of an extension position of an indentation according to an embodiment of this application;
FIG. 13 is a schematic diagram of a battery pack according to an embodiment of this application; and
FIG. 14 is a schematic diagram of cooperation between a battery pack and a bottom plate according to an embodiment of this application.

### DESCRIPTION OF EMBODIMENTS

The following describes embodiments of this application in detail. Examples of the embodiments are shown in the accompanying drawings, and reference signs that are the same or similar always indicate the same or similar elements or elements with the same or similar functions. The embodiments described below with reference to the accompanying drawings are illustrative and merely for explaining this application, and cannot be construed as any limitations on this application.

In the descriptions of this application, it should be understood that the orientations or positional relationships indicated by the terms "center", "upper", "lower", "front", "rear", "left", "right", "perpendicular", "horizontal", "top", "bottom", "inside", "outside", and the like are based on the orientations or positional relationships shown in the accompanying drawings. These terms are merely for ease and brevity of description of this application rather than indicating or implying that the apparatuses or components mentioned must have specific orientations or must be constructed or manipulated according to specific orientations, and therefore shall not be construed as any limitation on this application.

It should be noted that the terms "first" and "second" are merely for the purpose of description, and shall not be understood as any indication or implication of relative importance or any implicit indication of the number of technical features indicated. Therefore, a feature limited by "first" or "second" may explicitly or implicitly include one or more features. Further, in the description of this application, "multiple" means at least two unless otherwise stated.

The battery cell may be a secondary battery. The secondary battery refers to a battery cell whose active material can be activated for reuse through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of this application.

The battery apparatus mentioned in the embodiments of this application may include one or more battery packs for providing a voltage and capacity. The battery pack may include multiple battery cells. The multiple battery cells are connected in series, parallel, or series-parallel through a busbar.

In some embodiments, the battery pack is typically formed by multiple battery cells arranged.

In some embodiments, the battery apparatus may be a battery pack. The battery pack includes a box and multiple battery packs, and the battery pack is accommodated in the box.

In an example, the battery pack may be a battery module. The battery pack may be fixed within the box in a way of fixing the battery module within the box.

In an example, the box may include a first box body and a second box body. The first box body and the second box body are engaged with each other to form a closed space in the box for accommodating the battery pack. The "closed" herein means "covered" or "closed", which may be "sealed" or "non-sealed". The first box body may be a top cover or a bottom plate.

In an example, the box may include a top cover, a frame, and a bottom plate. The top cover and the bottom plate are both connected to the frame to form a closed space in the box for accommodating the battery pack.

In some embodiments, the box may be used as part of a chassis structure of a vehicle. For example, part of the box may become at least part of a chassis of a vehicle, or part of the box may become at least parts of a cross beam and a longitudinal beam of a vehicle.

The technical solution described in the embodiments of this application is applicable to battery apparatuses and electric devices using battery apparatuses.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for description of the following embodiments.

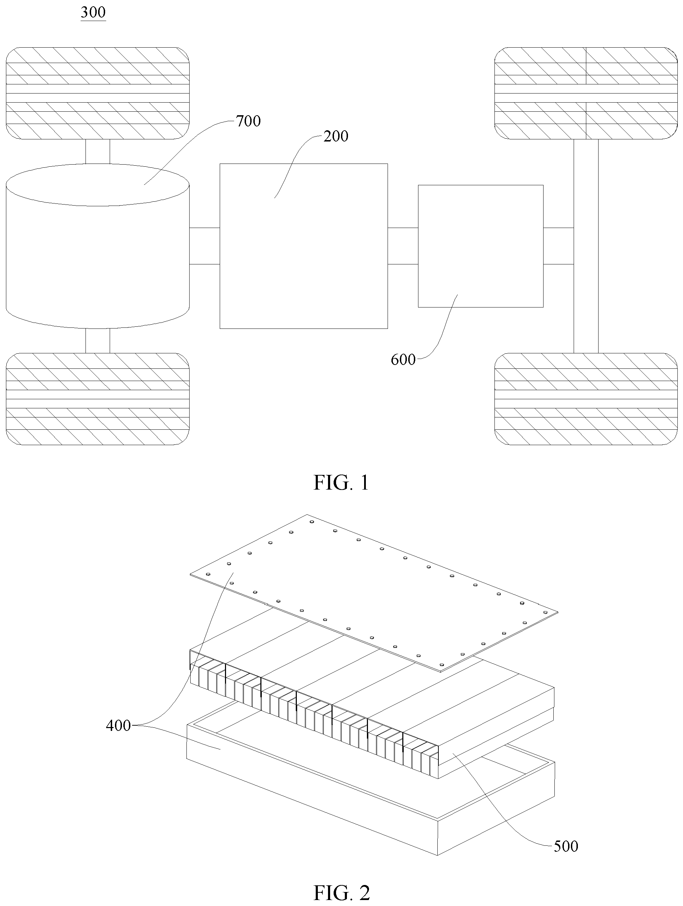

Refer to FIG. 1.FIG. 1 is a schematic structural diagram of a vehicle according to some embodiments of this application. The vehicle is provided with a battery apparatus 200 inside, where the battery apparatus 200 may be disposed at the bottom, front, or rear of the vehicle. The battery apparatus 200 may be configured to supply power to the vehicle. For example, the battery apparatus 200 may be used as an operational power source for the vehicle.

The vehicle may further include a controller 600 and a motor 700, where the controller 600 is configured to control the battery apparatus 200 to supply power to the motor 700 which is formed as a load, for example, to satisfy operating power needs for start, navigation, and driving of the vehicle.

In some embodiments of this application, the battery apparatus 200 may be used as not only the operational power source for the vehicle but also a driving power source for the vehicle, replacing or partially replacing fossil fuel or natural gas to provide driving traction for the vehicle.

Refer to FIG. 2. FIG. 2 is an exploded view of a battery apparatus 200 according to some embodiments of this application. The battery apparatus 200 includes a box 400, where the box 400 is configured to accommodate a battery cell 100.

The box 400 is a component for accommodating the battery cell 100. The box 400 provides an arrangement space for a battery pack 500. The box 400 may be a variety of structures. In some embodiments, the box 400 may include a tray and a cover plate. The tray and the cover plate fit together to define the arrangement space for accommodating the battery cell 100. The tray and the cover plate may be of various shapes, such as cuboid or cylinder. The tray may be a hollow structure with one side open, and the cover plate may also be a hollow structure with one side open, where the open side of the cover plate covers the open side of the tray to form the box 400 with the arrangement space. Alternatively, the tray may be a hollow structure with one side open, and the cover plate is a plate structure, where the cover plate covers the open side of the tray to form the box 400 with the arrangement space.

In an example, the battery cell 100 may be a pouch battery cell.

In the battery apparatus 200, there may be one or more battery cells 100. Multiple battery cells 100 are assembled into one battery pack 500 through a covering shell 510. One or more battery packs 500 are assembled in the box 400. If multiple battery cells 100 are provided, the multiple battery cells 100 may be connected in series, parallel, or series-parallel, where being connected in series-parallel means a combination of series connection and parallel connection of the multiple battery cells 100. Alternatively, multiple battery cells 100 may be first connected in series, parallel, or series-parallel to form the battery pack 500, and then multiple battery packs 500 are connected in series, parallel, or series-parallel to form an entirety accommodated in the box 400.

The battery cell 100 serves as the smallest energy unit of the battery apparatus 200. The battery cell 100 includes a flexible housing 10 and an electrode assembly 20 disposed in the flexible housing 10.

An internal environment formed in the flexible housing 10 can be used to accommodate the electrode assembly 20, an electrolyte, and other components. One side of the flexible housing 10 may be provided with an opening for injecting the electrolyte and putting the electrode assembly 20 into the housing.

The flexible housing 10 may be further provided with an electrode terminal, and the electrode assembly 20 is a component in the battery cell 100 where electrochemical reactions take place. One or more electrode assemblies 20 may be contained within the flexible housing 10. The electrode assembly 20 is mainly formed by winding or stacking a positive electrode plate and a negative electrode plate, and a separator is typically disposed between the positive electrode plate and the negative electrode plate. Parts of the positive electrode plate and the negative electrode plate that have active substances constitute a body portion of the electrode assembly 20, while parts of the positive electrode plate and the negative electrode plate that have no active substance separately constitute a tab. A positive electrode tab and a negative electrode tab may both be located at one end of the body portion or be located at both ends of the body portion respectively. During charge and discharge of the battery apparatus 200, a positive electrode active substance and a negative electrode active substance react with the electrolyte, and a tab is connected to the electrode terminal to form a current loop.

The positive electrode plate may include a positive electrode current collector and a positive electrode film layer disposed on at least one surface of the positive electrode current collector, and the positive electrode film layer includes a positive electrode active material.

In an example, the positive electrode current collector has two opposite surfaces in its thickness direction, and the positive electrode film layer is disposed on either or both of the two opposite surfaces of the positive electrode current collector.

In an example, the positive electrode current collector may be a metal foil current collector or a composite current collector. For example, the metal foil may be made of stainless steel, copper, aluminum, nickel, baked carbon, carbon, nickel, titanium, silver-coated aluminum, stainless steel, or the like. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In an example, when the battery cell 100 in the embodiments of this application is a lithium-ion battery, the positive electrode active material may include at least one of the following materials: phosphate, layered transition metal oxide, and respective modified compounds thereof. Optionally, the positive electrode active material may include layered transition metal oxide and a respective modified compound thereof, helping to increase the energy density of the battery cell 100. However, this application is not limited to these materials, and other traditional materials that can be used as the positive electrode film layer of a battery can also be used. One of these positive electrode active materials may be used alone, or two or more of them may be used in combination.

An example of the phosphate may include but is not limited to at least one of lithium iron phosphate (for example, LiFePO₄ (or LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

The layered transition metal oxide includes at least one of a compound represented by a general formula LiₐNi_{b}Co_{c}M_{d}OₑA_{f} and a respective modified compound thereof. 0.8≤a≤1.2, 0.3≤b<1, 0<c<1, 0<d<1, 1≤e≤2, 0≤f≤1, M includes at least one of Mn, Al, Zr, Zn, Cu, Cr, Mg, Fe, V, Ti, and B, and A includes at least one of N, F, S, and Cl. Optionally, 0.5≤b<1. Further optionally, 0.75≤b≤0.98.

An example of the layered transition metal oxide may include but is not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (or NCM333 for short), LiNi_{0.5}Co_{0.2}Mn_{0.3}O₂ (or NCM523 for short), LiNi_{0.5}Co_{0.25}Mn_{0.25}O₂ (or NCM211 for short), LiNi_{0.6}Co_{0.2}Mn_{0.2}O₂ (or NCM622 for short), and LiNi_{0.8}Co_{0.1}Mn_{0.1}O₂ (or NCM811 for short)), LiNi_{0.9}Co_{0.05}Mn_{0.05}O₂ (or Ni90 for short), lithium nickel cobalt aluminum oxide (for example, LiNi_{0.80}Co_{0.15}Al_{0.05}O₂), and modified compounds thereof.

When the battery cell 100 in the embodiments of this application is a sodium-ion battery, the positive electrode active material may include but is not limited to at least one of a sodium-containing transition metal oxide, a polyanion material (such as phosphate, fluorophosphate, pyrophosphate, and sulfate), and a Prussian blue material.

In an example, the positive electrode active material for sodium-ion batteries may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material represented by a general formula XₚM'_{q}(PO₄)ᵣOₓY₃₋ₓ. In the general formula XₚM'_{q}(PO₄)ᵣOₓY₃₋ₓ, 0<p≤4, 0<q≤2, 1≤r≤3, 0≤x≤2, X includes at least one of H+, Li+, Na+, K+, and NH4+, M' is a transition metal cation and is optionally at least one of V, Ti, Mn, Fe, Co, Ni, Cu, and Zn, and Y is a haloanion and is optionally at least one of F, Cl, and Br.

In the embodiments of this application, the modified compounds of the foregoing positive electrode active materials may be modified by doping and/or surface coating on the positive electrode active material, for example, carbon coating modification and fast ion conductor coating modification.

Charge and discharge processes of the battery cell 100 are accompanied by intercalation, deintercalation, and consumption of active ions such as Li, and a molar percentage of Li varies when the battery cell 100 is discharged to different states. In the enumeration of the positive electrode active materials in the embodiments of this application, the molar percentage of Li is in an initial state of the material, that is, a state before the material is fed. When the positive electrode active material is applied to a battery system, the molar percentage of Li may change after a charge-discharge cycle.

In the enumeration of the positive electrode active materials in the embodiments of this application, the molar percentage of oxygen O is only a theoretical state value. Lattice oxygen release results in a change in molar percentage of oxygen O, and in reality, the molar percentage of oxygen O may fluctuate.

In the embodiments of this application, a percentage of an element in the positive electrode active material has a well-known meaning in the art and can be detected using devices and methods well known in the art. For example, a plasma atomic emitter (ICP-OES, instrument model: Thermo ICAP7400) is used for determination using inductively coupled plasma atomic emission spectroscopy with reference to EPA 6010D-2014. First, 0.4 g of a positive electrode active material is weighed out, and added with 10 mL aqua regia (with a concentration of 50%). Then, the mixture is placed on a 180°C slab for 30 min. After digestion on the slab, a volume is adjusted to 100 mL, and quantitative determination is performed using a standard curve method.

In some embodiments, the positive electrode may be made of foamed metal. The foamed metal may be foamed nickel, foamed copper, foamed aluminum, foamed alloy, foamed carbon, or the like. When the positive electrode is made of a foamed metal, a surface of the foamed metal may be provided with no positive electrode film layer. Certainly, it may alternatively be provided with a positive electrode film layer. In an example, a lithium source material, potassium metal, or sodium metal may be provided in the foamed metal in a filling and/or depositing manner, where the lithium source material is a lithium metal and/or lithium-rich material.

In some embodiments, the positive electrode film layer further optionally includes a positive electrode conductive agent. A type of the positive electrode conductive agent is not particularly limited in the embodiments of this application. In an example, the positive electrode conductive agent includes at least one of superconducting carbon, conductive graphite, acetylene black, carbon black, Ketjen black, carbon dots, carbon nanotubes, graphene, and carbon nanofiber. In some embodiments, a mass percentage of the positive electrode conductive agent in the positive electrode film layer is ≤ 5wt%.

In some embodiments, the positive electrode film layer further optionally includes a positive electrode binder. A type of the positive electrode binder is not particularly limited in the embodiments of this application. In an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some embodiments, a mass percentage of the positive electrode binder in the positive electrode film layer is ≤ 5wt%.

The positive electrode film layer is typically formed by applying a positive electrode slurry onto the positive electrode current collector, followed by drying and cold pressing. The positive electrode slurry is typically formed by dispersing the positive electrode active material, an optional conductive agent, an optional binder, and any other components in a solvent and stirring them to uniformity. The solvent may be N-methylpyrrolidone (NMP), but is not limited thereto.

In some embodiments, the negative electrode may be a negative electrode plate. The negative electrode plate may include a negative electrode current collector and a negative electrode film layer disposed on at least one surface of the negative electrode current collector. The negative electrode film layer includes a negative electrode active material.

In An example, the negative electrode current collector includes two opposite surfaces in its thickness direction, and the negative electrode film layer is disposed on either or both of the two opposite surfaces of the negative electrode current collector.

In an example, the negative electrode current collector may be a metal foil, a foamed metal, or a composite current collector. For example, the metal foil may be made of silver-coated aluminum or stainless steel, stainless steel, copper, aluminum, nickel, baked carbon, carbon, nickel, titanium, or the like. The foamed metal may be foamed nickel, foamed copper, foamed aluminum, foamed alloy, foamed carbon, or the like. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In an example, the negative electrode active material can use a negative electrode active material well known in the art for battery cell 100. In an example, the negative electrode active material may include at least one of the following materials: a carbon material (for example, the carbon material includes at least one of artificial graphite, natural graphite, soft carbon, and hard carbon), a silicon-based material, a tin-based material, lithium titanate, and the like. The silicon-based material may include at least one of elemental silicon, silicon oxide, silicon-carbon composite, silicon-nitrogen composite, and silicon alloy. The tin-based material may include at least one of elemental tin, tin oxide, and tin alloy. However, this application is not limited to these materials, and other traditional materials that can be used as a negative electrode film layer for batteries may also be used. One of these negative electrode film layers may be used alone, or two or more of them may be used in combination.

In some embodiments, the negative electrode active material includes the silicon element. The silicon element can exist in the form of a silicon-based material. For example, the silicon-based material may include at least one of elemental silicon, silicon oxide, silicon-carbon composite, silicon-nitrogen composite, and silicon alloy. The introduction of silicon element can increase the energy density of the battery cell 100.

In some embodiments, a mass percentage of the silicon element in the negative electrode film layer ranges from 1wt% to 32wt%, optionally from 2wt% to 19wt%, and further optionally from 6wt% to 13wt%. In a system of the battery cell 100, the mass percentage of the silicon element being within the above ranges can increase the energy density of the battery cell 100.

In the embodiments of this application, the mass percentage of the silicon element in the negative electrode film layer has a well-known meaning in the art, and can be detected using devices and methods well known in the art. For example, a negative electrode plate is immersed in a solvent such as water, a negative electrode active material is separated from a negative electrode current collector, vacuum filtration is performed to obtain a negative electrode active material, and then a percentage of the silicon element in the negative electrode active material is determined using an inductively coupled plasma-emission spectrometer of model ICAP7400 from Thermo Fisher Scientific in the US with reference to the GB/T30902-2014 standard.

In some embodiments, the negative electrode film layer further optionally includes a negative electrode conductive agent. A type of the negative electrode conductive agent is not particularly limited in the embodiments of this application. In an example, the negative electrode conductive agent may include at least one of superconducting carbon, conductive graphite, acetylene black, carbon black, Ketjen black, carbon dots, carbon nanotubes, graphene, and carbon nanofiber. In some embodiments, a mass percentage of the negative electrode conductive agent in the negative electrode film layer is ≤ 5wt%.

In some embodiments, the negative electrode film layer further optionally includes a negative electrode binder. A type of the negative electrode binder is not particularly limited in the embodiments of this application. In an example, the negative electrode binder may include at least one of styrene-butadiene rubber (SBR), water-soluble unsaturated resin SR-1B, water-based acrylic resin (for example, polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, a mass percentage of the negative electrode binder in the negative electrode film layer is ≤ 5%.

In some embodiments, the negative electrode film layer further optionally includes another additive. In an example, the another additive may include a thickener, for example, sodium carboxymethyl cellulose (CMC-Na), a PTC thermistor material, or the like. In some embodiments, a mass percentage of the another additive in the negative electrode film layer is ≤ 2wt%.

In some embodiments, the positive electrode current collector may be made of aluminum, and the negative electrode current collector may be made of copper.

In some embodiments, a separating member includes a separator. A type of the separator is not particularly limited in this application, and any well-known porous separator with good chemical stability and mechanical stability can be selected.

The separator is not limited to any particular type in the embodiments of this application and may be any well-known porous separator with good chemical stability and mechanical stability.

In some embodiments, a material of the separator may include one or more of glass fiber, non-woven fabric, polyethylene, polypropylene, and polyvinylidene fluoride. The separator may be a single-layer film or a multilayer composite film and is not particularly limited. When the separator is a multilayer composite film, all layers may be made of the same or different materials. This is not particularly limited.

In some embodiments, the separator film can include a porous base film and a coating disposed on at least one side of the porous base film, where the coating may include at least one of inorganic particles or organic particles.

The porous base film may include one or more of polyethylene and polypropylene.

Inorganic particles have good heat resistance, which can improve the overall heat resistance of the separator. Within an operation voltage range of a sodium-ion battery, inorganic particles basically will not undergo oxidation and reduction reactions with metallic dendrites. In other words, the inorganic particles are configured not to undergo oxidation and reduction reactions with alkali metals and/or alkaline earth metals at a nominal voltage of the sodium-ion battery.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, strontium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyester (such as polyethylene terephthalate, polyethylene naphthalate, and polybutylene terephthalate), polyphenylene sulfide, polyaramid, polyamide-imide, a copolymer of polyimide, butyl acrylate and methyl methacrylate, and mixtures thereof.

In some embodiments, the battery cell 100 further includes an electrolyte.

During charge and discharge of the battery cell, active ions are intercalated and deintercalated back and forth between the positive electrode plate and the negative electrode plate, and the electrolyte serves to transport active ions between the positive electrode plate and the negative electrode plate. A type of the electrolyte is not particularly limited in the embodiments of this application, and may be selected based on actual needs.

The electrolyte includes an electrolytic salt and a solvent. Types of the electrolytic salt and the solvent are not specifically limited, and may be selected based on actual needs.

In some embodiments, the electrolyte further optionally includes an additive. For example, the additive may include a negative electrode film-forming additive, or may include a positive electrode film-forming additive, or may include an additive that can improve some performance of a battery, for example, an additive for improving over-charge performance of the battery, an additive for improving high-temperature performance of the battery, and an additive for improving low-temperature power performance of the battery.

For example, the additive includes at least one of a cyclic carbonate compound containing unsaturated bonds, a sulfate compound, a sulfite compound, a sulfonic acid lactone compound, a disulfonic acid compound, a nitrile compound, an aromatic compound, an isocyanate compound, a phosphazene compound, an anhydride, a cyclic anhydride compound, a phosphite compound, a phosphate compound, borate, and a carboxylate compound.

In related technology, the electrode assembly 20 of the battery cell 100 is disposed in the flexible housing 10, and the flexible housing 10 is configured as a high temperature resisting material member, resulting in small damage to the flexible housing 10 during thermal runaway but resulting in poor ability to constrain the battery cell 100; and high-temperature gas flow generated by the electrode assembly 20 entrains solid particles and liquid substances inside the flexible housing 10 to form high-temperature gas and fire flow that is ejected out of the flexible housing 10, resulting in a limited protection effect for the flexible housing 10. A failure in controlling an ejection direction of the high-temperature gas and fire flow causes damage to the insulating interface of the battery apparatus 200 and easily causes secondary damage.

Based on this, this application discloses a battery cell 100, where at least a circumferential surface 12 of a flexible housing 10 is provided with a pressure relief region 121, allowing the battery cell 100 to achieve directional pressure relief within the pressure relief region 121. When the battery cell 100 experiences thermal runaway, high-temperature gas and fire flow can be discharged through the pressure relief region 121 to guide an ejection direction of gas and fire flow, thereby reducing the probability of damage to the insulating interface and secondary damage caused by the thermal runaway, slowing the spread of the thermal runaway, and improving the reliability of the battery cell 100.

The following describes a battery cell 100, a battery apparatus 200, and an electric device 300 according to the embodiments of this application with reference to FIG. 1 to FIG. 14.

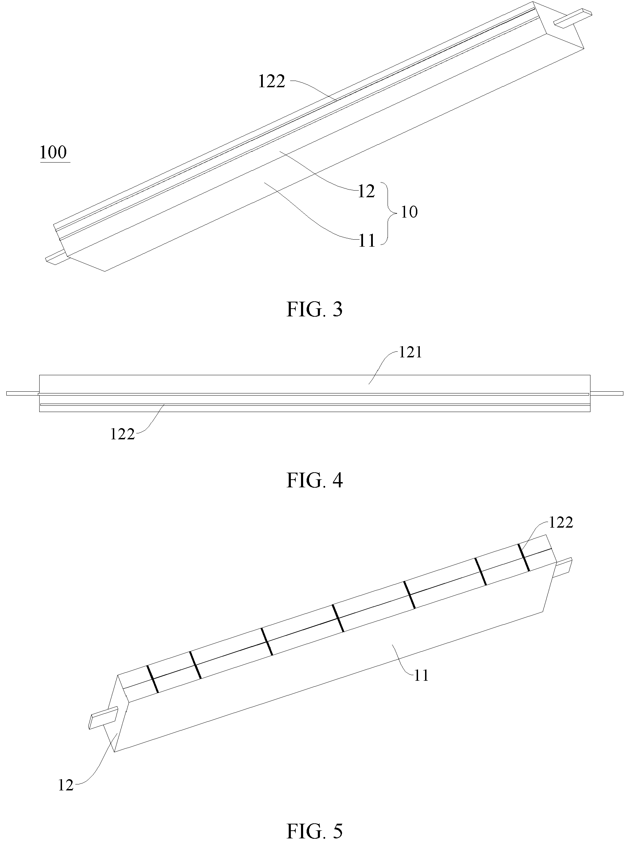

As shown in FIG. 3, FIG. 5, and FIG. 7, this application provides a battery cell 100 including: a flexible housing 10 and an electrode assembly 20, where the electrode assembly 20 is disposed within the flexible housing 10.

As shown in FIG. 4, FIG. 6, and FIG. 8, the flexible housing 10 has a side surface 11 opposite a large surface of the electrode assembly 20, and a circumferential surface 12 avoiding the large surface. The circumferential surface 12 and the side surface 11 are connected along circumference of the electrode assembly 20, and at least the circumferential surface 12 is provided with a pressure relief region 121.

The electrode assembly 20 may include one or more bare cells, and the bare cell may be configured as a wound cell or a stacked cell. During a stacking or winding process of the bare cell, a surface with the largest area forms the large surface of the electrode assembly 20, while other surfaces with a small area enclose the periphery of the large surface and are configured to define a peripheral side surface of the electrode assembly 20. Correspondingly, the flexible housing 10 is configured to accommodate the electrode assembly 20. The flexible housing 10 has the side surface 11 opposite the large surface and the circumferential surface 12 opposite the peripheral side surface.

In this application, at least the circumferential surface 12 is provided with the pressure relief region 121, meaning that the pressure relief region 121 may be provided on one side surface 11, two side surfaces 11, one circumferential surface 12, multiple circumferential surfaces 12, or on both the side surface 11 and the circumferential surface 12. By the provision of the pressure relief region 121, the battery cell 100 can achieve pressure relief through the pressure relief region 121. Moreover, the pressure relief region 121 may be provided on a suitable surface of the flexible housing 10, so that the battery cell 100 can achieve pressure relief through the pressure relief region 121, achieving safety protection for the battery cell 100. With pressure relieved through the pressure relief region 121, directional pressure relief of the battery cell 100 can be realized. To be specific, with the pressure relieved through only the pressure relief region 121, emissions inside the battery cell 100 can be guided during the pressure relief process, thereby realizing ordered discharge.

According to the battery cell 100 in this embodiment of this application, the flexible housing 10 is provided with the pressure relief region 121 to realize directional pressure relief of the battery cell 100 during thermal runaway and realize ordered discharge of high-temperature gas and fire flow inside the battery cell 100, thereby reducing damage to the insulating interface of the battery apparatus 200, reducing secondary damage, and improving the reliability of the battery cell 100 and even the reliability of the battery apparatus 200.

The insulating interface of the battery apparatus 200 includes: an insulating structure between adjacent battery cells 100, an insulating structure between adjacent battery packs 500, and an insulating structure between the battery pack 500 and a surrounding component. Achieving ordered discharge of high-temperature gas and fire flow can reduce an impact on the insulating interface during the pressure relief of the battery cell 100, thereby reducing the probability of secondary damage and improving the reliability.

As shown in FIG. 3, FIG. 5, and FIG. 7, according to some embodiments of this application, the pressure relief region 121 includes a weak portion 122 disposed on the circumferential surface 12. The weak portion 122 is configured to rupture for pressure relief when a pressure within the flexible housing 10 exceeds a pressure threshold.

The weak portion 122 may be formed as a weakened connecting structure such as an indentation. When the pressure within the flexible housing 10 exceeds the pressure threshold, the weakened connecting structure can preferentially experience structural damage (that is, rupture), to form a pressure relief outlet on at least one surface of the flexible housing 10 and achieve directional pressure relief through the pressure relief outlet.

Thus, with the provision of the weak portion 122, the pressure relief region 121 formed on the circumferential surface 12 can achieve timely pressure relief when the battery cell 100 experiences thermal runaway, so that the reliability is improved while the pressure relief portion 520 is located on the circumferential surface 12. The pressure relief portion 520 is at a more appropriate position, allowing for directional pressure relief along the circumferential surface 12, and an appropriate pressure relief direction can reduce the impact on surrounding components, especially on an adjacent battery cell 100 during the pressure relief process, thereby further improving the reliability of the battery cell 100.

The flexible housing 10 covers the outside of the electrode assembly 20. The flexible housing 10 can be configured as a wound covering structure and can be provided with an indentation on the circumferential surface 12 or the side surface 11. The weak portion 122 can be disposed on the circumferential surface 12. For example, the weak portion 122 can be configured as a weakened connecting structure, and at least part of the indentation is connected through the weakened connecting structure. Alternatively, the weak portion 122 may be arranged independently, and the pressure relief region 121 and the indentation may be located on a same surface, or the pressure relief region 121 and the indentation are located on different surfaces.

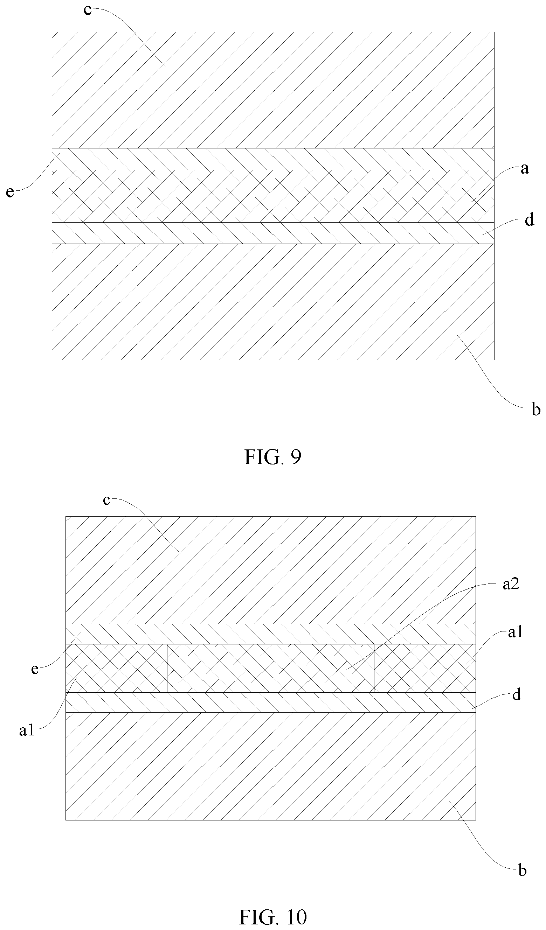

As shown in FIG. 9, FIG. 10, and FIG. 11, according to some embodiments of this application, the film material of the flexible housing 10 is configured as a stacked multilayer film structure and at least includes a metal barrier layer a, where the weak portion 122 is formed on the metal barrier layer a, or the weak portion 122 extends and penetrates through at least part of the metal barrier layer a.

In some embodiments, the weak portion 122 is formed on the metal barrier layer a, so that the structural strength of a region where the weak portion 122 is located is lower than the structural strength of other regions, allowing this region to rupture preferentially to achieve directional pressure relief. In some other embodiments, the weak portion 122 is formed at the side of the flexible housing 10 away from the electrode assembly 20, extends towards the metal barrier layer a, and penetrates through at least part of the metal barrier layer a, so that the structural strength of the region where the weak portion 122 is located is lower than the structural strength of other regions, allowing this region to rupture preferentially to achieve directional pressure relief.

The film material of the flexible housing 10 refers to the material of the flexible housing 10, and its own film material is configured as a multilayer film structure to enhance the structural strength of the flexible housing 10 through the metal barrier layer a in the multilayer film structure, reducing the probability of the electrode assembly 20 piercing the flexible housing 10, and improving the reliability of the battery cell 100. When the weak portion 122 is formed on the metal barrier layer a, or penetrates through the metal barrier layer a, the processing difficulty of the weak portion 122 can be reduced, and the weak portion 122 has higher stability and reliability.

As shown in FIG. 4, FIG. 6, FIG. 8, and FIG. 12, according to some embodiments of this application, the weak portion 122 is configured as an indentation, and the indentation penetrates through at least part of the metal barrier layer a.

The weak portion 122 can be configured as an indentation, and the indentation can be formed on the circumferential surface 12 or the side surface 11 of the flexible housing 10 through laser etching, knife scribing, or the like. In addition, the indentation penetrates through at least part of the metal barrier layer a, so that the indentation can rupture preferentially when a pressure within the flexible housing 10 acts on a region where the indentation is located, so as to achieve directional pressure relief.

Therefore, in the embodiments where the weak portion 122 is configured as an indentation, the indentation penetrates through only at least part of the metal barrier layer a, and the indentation extends from a side surface of the flexible housing 10 away from the electrode assembly 20 to a side surface of the flexible housing 10 close to the electrode assembly 20, weakening the structure of part of the region. Thus, while the weak portion 122 is formed, stable insulation can be maintained between the metal barrier layer a and the interior of the flexible housing. Moreover, the reliability and stability of the battery cell 100 can be improved.

As shown in FIG. 3 to FIG. 8, according to some embodiments of this application, a contour of the indentation has one or more of a circular shape, an oval shape, a rectangular shape, a linear shape, or a Z shape.

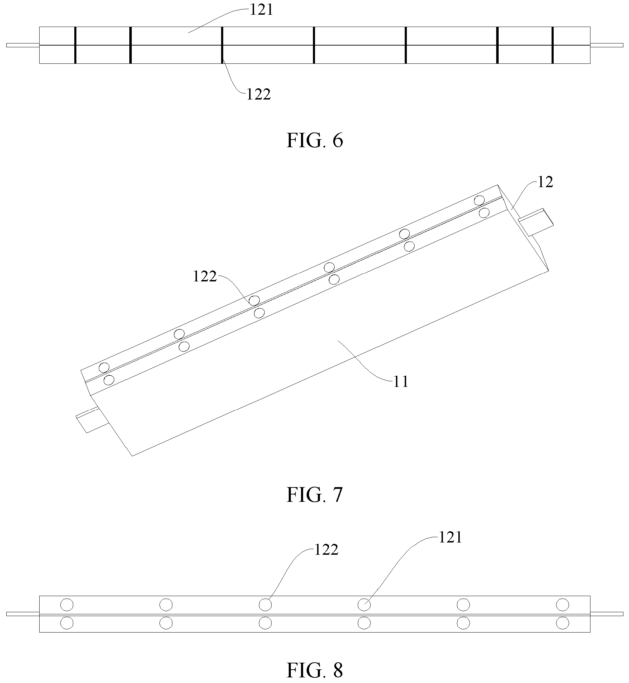

In the embodiments shown in FIG. 3 and FIG. 4, the indentation is in a linear shape, and the indentation extends along a length direction of the circumferential surface 12 or the side surface 11 and is located on one side of the indentation of the flexible housing 10. In the embodiments shown in FIG. 5 and FIG. 6, the indentation is in a linear shape, and the indentation extends along a width direction of the circumferential surface 12 or the side surface 11 and are located on both sides of the indentation of the flexible housing 10. In the embodiments shown in FIG. 7 and FIG. 8, the indentation is in a circular shape, and the indentation may be located on both sides of the indentation of the flexible housing 10.

The structure and shape of the indentation are not specifically limited in this application. Persons skilled in the art can process an appropriately shaped indentation on a suitable surface of the flexible housing 10 according to the requirements for opening the indentation.

Thus, the indentation is provided with a suitable shape to serve as the weak portion 122, so that the processing difficulty can be reduced to reduce production costs of the battery cell 100; moreover, the indentation can be provided at a suitable position on a suitable surface to achieve directional pressure relief, thereby further improving the reliability of the battery cell 100.

According to some embodiments of this application, multiple indentations are provided and are spaced apart on the circumferential surface 12 or the side surface 11 of the flexible housing 10.

In the embodiments where the indentation is in a linear shape and the indentation extends along the length direction of the circumferential surface 12 or the side surface 11 where the indentation is located, multiple indentations may be provided and the multiple indentations may be spaced apart in the width direction of the circumferential surface 12 or the side surface 11 where the indentations are located. In the embodiments where the indentation is in a linear shape and the indentation extends along the width direction of the circumferential surface 12 or the side surface 11 where the indentation is located, multiple indentations may be provided and the multiple indentations may be spaced apart in the length direction of the circumferential surface 12 or the side surface 11 where the indentations are located. In the embodiments where the indentation is in a closed shape such as a circular shape or an oval shape, multiple indentations may be spaced apart in the length direction and the width direction of the circumferential surface 12 or the side surface 11 where the indentations are located.

Thus, the multiple indentations spaced apart on the circumferential surface 12 or the side surface 11 can achieve rapid pressure relief under the premise of directional (that is, in a direction indicated by the surface where the indentations are located) pressure relief. This reduces the impact during the pressure relief process, allows for a more uniform stress distribution on the surface where the multiple indentations are located, and achieves higher pressure relief response speed and reliability.

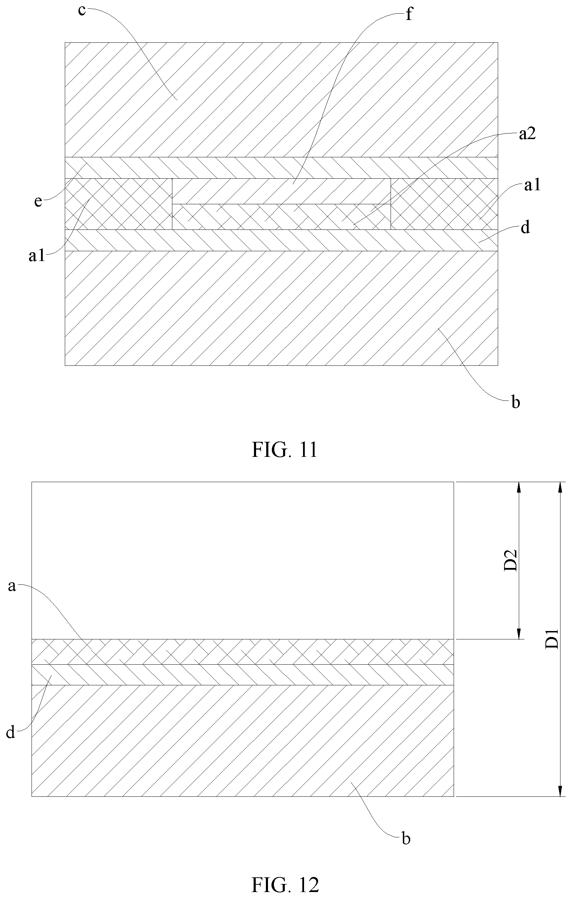

As shown in FIG. 9 and FIG. 12, according to some embodiments of this application, a thickness of the film material of the flexible housing 10 is D1, and a depth of the indentation is D2, satisfying 1/3≤D1/D2≤2/3.

For example, if the thickness of the film material is 3 mm, the depth of the indentation is 1 mm to 2 mm (including endpoint values).

Thus, the depth of the indentation is not less than 1/3 of the thickness of the film material, which prevents an excessively small depth of the indentation, thereby achieving a better effect that the weak portion 122 preferentially ruptures compared to other regions of the flexible housing 10, and achieving better reliability and stability of the pressure relief region 121. In addition, the depth of the indentation is not greater than 2/3 of the thickness of the film material, which prevents an excessively large depth of the indentation, thereby guaranteeing the structural strength of the flexible housing 10 and reducing the probability of unintentional triggering of the weak portion 122.

As shown in FIG. 10, according to some embodiments of this application, the film material of the flexible housing 10 includes: a metal barrier layer a, a first plasticized barrier layer b located on a side of the metal barrier layer a facing the electrode assembly 20, and a second plasticized barrier layer c located on a side away from the electrode assembly 20. The metal barrier layer a includes a body region a1 and a weak region a2 corresponding to the weak portion 122. The weak region a2 and the body region a1 are made of different materials.

The film material of the flexible housing 10 is configured as a symmetric structure. To be specific, the metal barrier layer a is provided with a first plasticized barrier layer b on the side facing the electrode assembly 20 and a second plasticized barrier layer c on the side away from the electrode assembly 20. The first plasticized barrier layer b and the second plasticized barrier layer c may be made of the same or different materials, but are both configured as plastic members, providing certain structural strength and insulation properties. This improves the structural strength of the flexible housing 10, also achieves insulation between the electrode assembly 20 and the metal barrier layer a and insulation between the metal barrier layer a and external components, and improves the insulation reliability and stability of the battery cell 100.

A first adhesive layer d is disposed between the first plasticized barrier layer b and the metal barrier layer a, and a second adhesive layer e is disposed between the second plasticized barrier layer c and the metal barrier layer a, so that the connection strength and structural stability between the first plasticized barrier layer b and the metal barrier layer a as well as the connection strength and structural stability between the second plasticized barrier layer c and the metal barrier layer a are higher. In addition, the weak region a2 and the body region a1 are made of different materials, and the structural strength of the body region a1 is higher than the structural strength of the weak region a2, so that the weak region a2 with lower structural strength forms the weak portion 122, and the weak portion 122 can rupture preferentially compared to the body region a1 when the pressure within the flexible housing 10 exceeds the pressure threshold, so as to achieve directional pressure relief.

In some embodiments, the weak portion 122 of this application is defined by the weak region a2 of the metal barrier layer a, and the weak region a2 and the body region a1 are made of different materials to achieve configuration of different structural strength of the weak portion 122 and the body region a1. While the above technical effects are achieved, the external surface of the flexible housing 10 can be smoother, improving the profile flatness of the battery cell 100 and reducing the probability of scratches with surrounding components.

As shown in FIG. 11, according to some embodiments of this application, the film material of the flexible housing 10 includes: a metal barrier layer a, a first plasticized barrier layer b located on a side of the metal barrier layer a facing the electrode assembly 20, and a second plasticized barrier layer c located on a side away from the electrode assembly 20. The metal barrier layer a includes a body region a1 and a weak region a2 corresponding to the weak portion 122. A thickness of the weak region a2 is less than a thickness of the body region a1.

The structure of the weak portion 122 in these embodiments of this application is not limited to the foregoing indentation or the use of different materials for the weak region a2 and the body region a1. Alternatively, the body region a1 and the weak region a2 may be made of the same material, but the thickness of the weak region a2 is less than the thickness of the body region a1. Alternatively, the body region a1 and the weak region a2 may be provided with different structural strength, thus realizing the same technical effects as in the foregoing embodiments.

The weak portion 122 of this application is defined by the weak region a2 of the metal barrier layer a, and the thickness of the weak region a2 is different from the thickness of the body region a1 to achieve the configuration of different structural strength of the weak portion 122 and the body region a1. While the above technical effects are achieved, the processing difficulty of a thinned part can also be reduced, and material costs can be reduced.

As shown in FIG. 11, according to some embodiments of this application, the film material further includes: a filler layer f, where the filler layer f is located between the first plasticized barrier layer b and the metal barrier layer a and fills the weak region a2, and/or the filler layer f is located between the second plasticized barrier layer c and the metal barrier layer a and configured to fill the weak region a2.

The weak region a2 is thinned relative to the body region a1 to define the weak portion 122. The thinned portion of the weak region a2 relative to the body region a1 may be located on the side away from the electrode assembly 20, then the filler layer f fills the side of the weak region a2 away from the electrode assembly 20. The thinned portion may alternatively be located on the side facing the electrode assembly 20, then the filler layer f fills the side of the weak region a2 facing the electrode assembly 20. The weak portion 122 may alternatively include a first portion and a second portion, where the first portion is located on the side of the weak region a2 facing the electrode assembly 20, the second portion is located on the side of the weak region a2 away from the electrode assembly 20, and the first portion and the second portion are each provided with a filler layer f therein.

Thus, the provision of the filler layer f can enhance the flatness of a side surface of the flexible housing 10 facing the electrode assembly 20 and a side away from the electrode assembly 20, reduce the probability of scratches occurring between the flexible housing 10 and surrounding components (for example, scratches of the electrode assembly 20), and can improve the reliability of the flexible housing 10.

According to some embodiments of this application, the battery cell is any one of a lithium iron phosphate battery, a ternary lithium battery cell, and a solid-state battery cell.

In other words, in some embodiments, the battery cell is configured as a lithium iron phosphate battery cell; in some embodiments, the battery cell is configured as a ternary lithium battery cell; and in some embodiments, the battery cell is configured as a solid-state battery cell.

It can be understood that in the embodiments of this application where the battery cell is configured as a solid-state battery cell, the solid-state battery cell may be any one of an oxide solid-state battery, a sulfide solid-state battery, and a hybrid polymer solid-state battery.

Thus, in the embodiments of this application where the battery cell is configured as a lithium iron phosphate battery cell, the reliability of the battery cell can be improved, and the cycle life of the battery cell can be extended. In the embodiments of this application where the battery cell is configured as a ternary lithium battery cell, the energy density of the battery cell and the endurance mileage can be increased. In the embodiments of this application where the battery cell is configured as a solid-state battery cell, the energy density can be increased, and the reliability can also be improved.

According to some embodiments of this application, when the battery cell is a lithium iron phosphate (LiFeO4) battery cell, a ratio of an amount of a positive electrode active material, an amount of a positive electrode binder, and an amount of a positive electrode conductive agent in a positive electrode material of the battery cell is 96:(1-3):(1-3); and when the battery cell is a ternary lithium battery cell, the ratio of the amount of the positive electrode active material, the amount of the positive electrode binder, and the amount of the positive electrode conductive agent is 96:(2-3):(1-2) in the positive electrode material of the battery cell.

For example, in the embodiments where the battery cell is a lithium iron phosphate battery cell, the ratio of the amount of the positive electrode active material, the amount of the positive electrode binder, and the amount of the positive electrode conductive agent may be 96:1:3, 96:3:1, 96:2:2, or the like, preferably 96:2:2; the positive electrode active material is lithium iron phosphate; the positive electrode binder is polyvinylidene fluoride; and the positive electrode conductive agent is conductive carbon black.

In the embodiments where the battery cell is a ternary lithium battery cell, the ratio of the amount of the positive electrode active material, the amount of the positive electrode binder, and the amount of the positive electrode conductive agent may be 96:2:2, 96:3:1, or the like, preferably 96:2.5:1.5; the positive electrode active material is LiNi_{0.8}Co_{0.1}Mn_{0.1}O₂; the positive electrode binder can be polyvinylidene fluoride; and the positive electrode conductive agent can be conductive carbon black.

Thus, in the embodiments where the battery cell is configured as a lithium iron phosphate battery cell, the positive electrode active material, the positive electrode binder, and the positive electrode conductive agent are used at the above ratios, which can improve the electrochemical performance and mechanical stability of the battery cell. In the embodiments where the battery cell is configured as a ternary lithium battery cell, the positive electrode active material, the positive electrode binder, and the positive electrode conductive agent are used in the above ratios, which can increase the energy density and prolong the cycle life of the battery.

As shown in FIG. 2, this application provides a battery apparatus 200 including: a box 400 and a battery pack 500, where at least one battery pack 500 is provided. The battery pack 500 includes: at least one battery cell 100 according to the foregoing embodiments and a covering shell 510, and at least one side surface of the covering shell 510 is provided with a pressure relief portion 520.

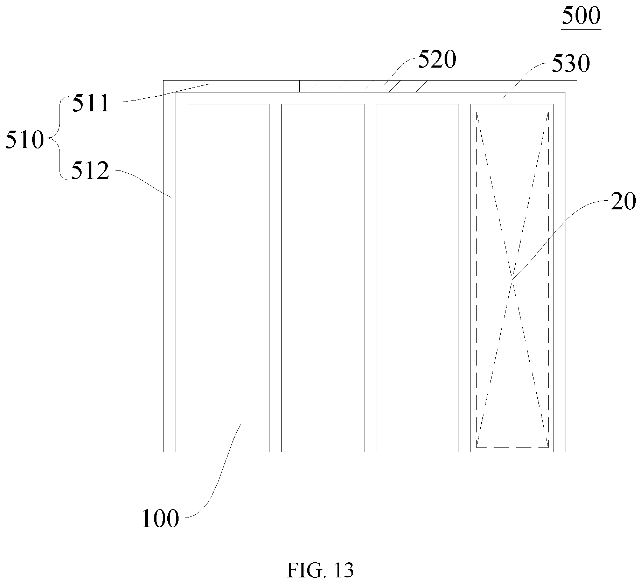

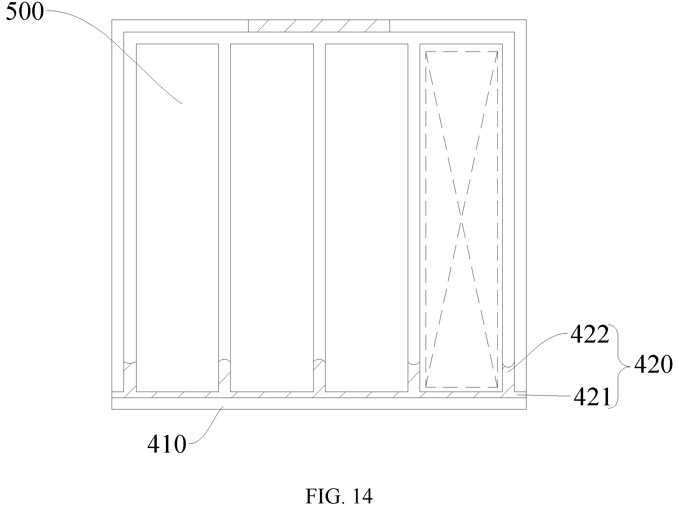

As shown in FIG. 13 and FIG. 14, an accommodating space is formed in the box 400, and one or more battery packs 500 are disposed in the accommodating space. The covering shell 510 of each battery pack 500 is internally provided with one or more battery cells 100, and the battery cell 100 is configured as the foregoing battery cell 100 using a flexible housing 10.

The covering shell 510 is configured to at least cover at least one of multiple circumferential surfaces 12 and two side surfaces 11 of the battery cell 100, and at least one circumferential surface 12 of the battery cell 100 is provided with a weak portion 122. A pressure relief portion 520 is formed on at least one side surface of the covering shell 510. For example, the pressure relief portion 520 is opposite the weak portion 122 or the pressure relief portion 520 is located on a first surface of the covering shell 510, while the weak portion 122 is opposite the second surface of the covering shell 510, and the first surface is adjacent to a second surface.

According to the battery apparatus 200 of the embodiments in this application, the covering shell 510 is provided with the pressure relief portion 520 that cooperates with the pressure relief region 121, so that when thermal runaway occurs in the battery cell 100, high-temperature gas and fire flow discharged through the pressure relief region 121 (weak portion 122) can be further released outwards through the pressure relief portion 520. Thus, the cooperation of the weak portion 122 and the pressure relief portion 520 allows for directional discharge of the high-temperature gas and fire flow, thereby improving the reliability of the battery apparatus 200.

As shown in FIG. 13 and FIG. 14, according to some embodiments of this application, the covering shell 510 includes a first plate 511 and second plates 512 located on both sides of the first plate 511, where the pressure relief portion 520 is formed on the first plate 511, and the pressure relief region 121 and the pressure relief portion 520 are at least partially opposite each other.

The first plate 511 and the second plates 512 located on both sides of the first plate 511 define a substantially U-shaped covering shell 510, allowing the first plate 511 of the covering shell 510 to be opposite one circumferential surface 12 of the battery cell 100. In addition, the two second plates 512 can be located opposite the two side surfaces 11 of the battery cell 100 respectively, enabling the weak portion 122 formed on the circumferential surface 12 to be at least partially opposite the pressure relief portion 520 formed on the first plate 511.

The pressure relief region 121 and the pressure relief portion 520 being at least partially opposite each other means that the weak portion 122 formed on the circumferential surface 12 is projected towards the first plate 511, and a projection contour at least partially overlaps with a contour of the pressure relief portion 520.

In this way, on one hand, the gas and fire flow generated after the thermal runaway of the battery cell 100 can be discharged directionally, achieving ordered discharge to reduce damage, especially secondary damage. On the other hand, a communication path between the pressure relief region 121 and the pressure relief portion 520 is shorter, promoting fast discharge and also minimizing a retention time of the gas and fire flow inside the covering shell 510. This has less impact on other battery cells 100 surrounding the battery cell 100 that experiences thermal runaway and can further reduce the spreading speed of the thermal runaway, thereby providing the reliability of the battery pack 500 and the battery apparatus 200.

According to some embodiments of this application, the second plate 512 is opposite the side surface 11, and the contour area of the projection of the second plate 512 facing the side surface 11 of the flexible housing 10 is less than or equal to the area of the side surface 11.

The circumferential surface 12 is defined to include a first surface and a second surface opposite the first surface, where the first surface is opposite the first plate 511, and the second surface is located away from the first plate 511. In addition, the second surface is configured to be connected to the box 400. Two sides of the first surface and second surface are respectively the two side surfaces 11 of the battery cell 100. Two ends of the first surface and second surface are respectively the other two circumferential surfaces 12 of the battery cell 100. The second plate 512 is located opposite the side surface 11 to limit the battery cell 100 in a direction where the second plate 512 is located, and an area size of a surface of the second plate 512 opposite the side surface 11 may be less than or equal to an area size of the side surface 11.

In some embodiments, a size of the second plate 512 is consistent with a size of the side surface 11, while in some other embodiments, the size of the second plate 512 is smaller than the size of the side surface 11. On one hand, this can prevent an excessively large size of the second plate 512 while such excessively large size causes a failure in connection between the second surface and the box 400, thereby improving the fixation stability and reliability of the battery pack 500 in the box 400. On the other hand, the material usage for the second plate 512 can be reduced, and the material costs of the battery pack 500 and the battery apparatus 200 can also be reduced.

As shown in FIG. 13, according to some embodiments of this application, the first plate 511 is spaced apart from a side of the circumferential surface 12 with the weak portion 122, to define an exhaust passage 530.

In this way, the high-temperature gas and fire flow generated after the rupture of the weak portion 122 may first be discharged to the exhaust passage 530, and is discharged through the pressure relief portion 520 after being preliminarily buffered through the exhaust passage 530. This can reduce the pressure of the high-temperature gas and fire flow after it flows out of the pressure relief portion 520, thereby reducing the impact and damage to the battery cell 100 after the thermal runaway.

According to some embodiments of this application, the first plate 511 is configured as a flat plate or an arc-shaped plate.

In some embodiments, the first plate 511 is configured as a flat plate; and in some other embodiments, the first plate 511 is configured as an arc-shaped plate.

According to some embodiments of this application, multiple pressure relief portions 520 are provided, and the multiple pressure relief portions 520 are spaced apart in a length direction and/or width direction of the first plate 511.

In this way, multiple weak portions 122 on each battery cell 100 can have corresponding pressure relief portions 520, so that the high-temperature gas and fire flow buffered through the exhaust passage 530 can be directly discharged through the corresponding pressure relief portions 520 to increase the discharge speed. This reduces the retention time of the high-temperature gas and fire flow in the exhaust passage 530 during discharging, thereby reducing the spread rate of thermal runaway between adjacent battery cells 100 in the battery pack 500, and improving the reliability of the battery pack 500.

According to some embodiments of this application, the covering shell 510 is configured as an aluminum shell or a stainless steel shell.

In some embodiments, the covering shell 510 is configured as an aluminum shell, while in some other embodiments, the covering shell 510 is configured as a stainless steel shell, so that the covering shell 510 is far superior in temperature resistance, structural strength, and the like compared to the flexible housing. The covering shell 510 with certain structural strength and rigidity supports and protects the battery cell 100 outside the battery cell 100, enhancing the structural strength of the battery pack 500 and reducing the spread rate of thermal runaway between adjacent battery packs 500, thereby improving the reliability of the battery apparatus 200.

As shown in FIG. 14, according to some embodiments of this application, the box 400 has a bottom plate 410, and the bottom plate 410 is connected to the battery cell 100 through an adhesive layer 420.

The bottom plate 410 of the box 400 is connected to the second surface of the battery cell 100 through the adhesive layer 420, to realize the fixation of the battery pack 500 to the box 400, improving the fixation stability and reliability of the battery pack 500.

Certainly, in some embodiments, the adhesive layer 420 is also used for connection and fixation between the bottom plate 410 to the second plate 512.

As shown in FIG. 14, according to some embodiments of this application, the bottom plate 410 is configured as a cold plate, and/or a cold plate is disposed on a side of the bottom plate 410 facing multiple battery cells 100, where the adhesive layer 420 is located between the cold plate and the multiple battery cells 100.

In some embodiments, the bottom plate 410 of the box 400 is formed as a cold plate, and the cold plate is connected to the battery cell 100 through the adhesive layer 420. In some other embodiments, a cold plate is disposed between the bottom plate 410 and the battery cell 100, and the cold plate is connected to the battery cell 100 through the adhesive layer 420.

The adhesive layer 420 is configured as a structural adhesive, and the bottom plate 410 configured as a cold plate or the bottom plate 410 provided with a cold plate is connected to the battery cell 100, which ensures stable and reliable fixation of the battery pack 500 within the box 400 and also realizes temperature adjustment of the battery pack 500 through the cold plate, so that the battery pack 500 can operate at a suitable temperature, improving the operation stability and reliability of the battery pack 500, reducing the probability of overheating of the battery pack 500, and reducing the possibility of thermal runaway in the battery pack 500, thereby improving the reliability of the battery pack 500 and even the reliability of the battery apparatus 200.

As shown in FIG. 14, according to some embodiments of this application, the adhesive layer 420 includes: an adhesive layer body 421 and an adhesive overflow portion 422, where the adhesive overflow portion 422 is located on a side of the adhesive layer body 421 facing multiple battery cells 100, located between adjacent battery cells 100, and/or located between the battery cell 100 and the second plate 512.

When the structural adhesive is used for connection and fixation between the battery cell 100 and the cold plate, at least part of the adhesive layer 420 overflows between adjacent battery cells 100, and/or between the second plate 512 and the battery cell 100 to form the adhesive overflow portion 422. The provision of the adhesive overflow portion 422 can increase an area between the adhesive layer 420 and the battery cell 100 as well as an area between the adhesive layer 420 and the second plate 512 so as to improve the fixation stability and reliability of the battery pack 500 on the box 400. Moreover, the adhesive overflow portion 422 can fill gaps between adjacent battery cells 100 and between the battery cell 100 and the second plate 512 so as to limit the battery cells 100 and the covering shell 510, thereby reducing movement of the battery pack 500 within the box 400 and reducing movement of battery cell 100 within the covering shell 510.

As shown in the accompanying drawings, the battery cell 100 in the embodiments of this application is configured as a pouch battery cell 100; the electrode assembly 20 is disposed in the flexible housing 10; at least the circumferential surface 12 of the flexible housing 10 is provided with the weak portion 122; the battery pack 500 includes at least one battery cell 100 according to the embodiments of this application; moreover, the pressure relief portion 520 on the first plate 511 of the covering shell 510 is at least partially aligned with the weak portion 122; the second plate 512 is opposite the side surface 11 of the flexible housing 10; the bottom plate 410 of the box 400 is configured as a cold plate, or a cold plate is disposed over the bottom plate 410; the cold plate is connected to the battery cell 100 through the adhesive layer 420; and the adhesive overflow portion 422 of the adhesive layer 420 overflows between adjacent battery cells 100 and/or between the battery cell 100 and the second plate 512.

This application discloses an electric device 300 including: the battery apparatus 200 according to the foregoing embodiments.

Further, as shown in FIG. 1, the electric device 300 may be a vehicle, and the battery apparatus 200 may be integrated into a chassis of the vehicle, meaning that the vehicle body is configured as a split body, an upper body and the integrated intelligent chassis are assembled, and the battery apparatus 200 forms a part of the integrated intelligent chassis. In this way, a top plate of the box 400 can participate in defining a vehicle floor, eliminating unnecessary stacking of multiple layers of plates, reducing material costs, making the spatial occupation of the chassis more reasonable, providing a larger space inside the chassis for accommodating the battery apparatus 200, and achieving higher energy density.

It can be understood that the electric device 300 is configured as a vehicle. To be specific, the vehicle uses the battery apparatus 200 mentioned above. The battery apparatus 200 has higher energy density and higher reliability, which can improve the driving reliability of the vehicle while increasing the endurance mileage of the vehicle.

Other structures and operations of the battery cell 100, the battery apparatus 200, and the electric device 300 according to an embodiment of this application are known to those skilled in the art and will not be further detailed herein.

In the description of this specification, the description referring to the terms "an embodiment", "some embodiments", "exemplary embodiments", "an example", "a specific example", or "some examples" means a specific feature, structure, material or characteristic described with reference to the embodiment or example is included in at least one embodiment or example of this application. In this specification, illustrative expressions of these terms do not necessarily refer to the same embodiment or example. Moreover, the specific features, structures, materials, or characteristics described may be combined in a suitable manner in any one or more embodiments or examples.

Although the embodiments of this application have been shown and described, persons of ordinary skill in the art can understand that various changes, modifications, substitutions, and variants of these embodiments may be made without departing from the principle and essence of this application, and the scope of this application is limited by the claims and its equivalents.

## Claims

1. A battery cell, comprising:
a flexible housing (10); and
an electrode assembly (20), disposed in the flexible housing (10);
wherein the flexible housing (10) has a side surface (11) opposite a large surface of the electrode assembly (20), and a circumferential surface (12) avoiding the large surface, the circumferential surface (12) and the side surface (11) are connected along circumference of the electrode assembly (20), and at least the circumferential surface (12) is provided with a pressure relief region (121).

2. The battery cell according to claim 1, wherein the pressure relief region (121) comprises a weak portion (122) disposed on the circumferential surface (12), and the weak portion (122) is configured to rupture for pressure relief when a pressure within the flexible housing (10) exceeds a pressure threshold.

3. The battery cell according to claim 2, wherein a film material of the flexible housing (10) is configured as a stacked multilayer film structure, and at least comprises a metal barrier layer (a); and the weak portion (122) is formed on the metal barrier layer (a), or the weak portion (122) extends and penetrates through at least part of the metal barrier layer (a).

4. The battery cell according to claim 2 or 3, wherein the weak portion (122) is configured as an indentation, and the indentation penetrates through at least part of the metal barrier layer (a).

5. The battery cell according to claim 4, wherein a contour of the indentation has one or more of a circular shape, an oval shape, a rectangular shape, a linear shape, or a Z shape.

6. The battery cell according to claim 4, wherein multiple indentations are provided, and the multiple indentations are spaced apart on the circumferential surface (12) or the side surface (11).

7. The battery cell according to any one of claims 4 to 6, wherein a thickness of the film material of the flexible housing (10) is D1, and a depth of the indentation is D2, satisfying 1/3≤D1/D2≤2/3.

8. The battery cell according to claim 2, wherein a film material of the flexible housing (10) comprises: a metal barrier layer (a), a first plasticized barrier layer (b) located on a side of the metal barrier layer (a) facing the electrode assembly (20), and a second plasticized barrier layer (c) located on a side away from the electrode assembly (20); the metal barrier layer (a) comprises a body region (a1) and a weak region (a2) corresponding to the weak portion (122); and the weak region (a2) and the body region (a1) are made of different materials.

9. The battery cell according to claim 2, wherein a film material of the flexible housing (10) comprises: a metal barrier layer (a), a first plasticized barrier layer (b) located on a side of the metal barrier layer (a) facing the electrode assembly (20), and a second plasticized barrier layer (c) located on a side away from the electrode assembly (20); the metal barrier layer (a) comprises a body region (a1) and a weak region (a2) corresponding to the weak portion (122); and a thickness of the weak region (a2) is less than a thickness of the body region (a1).

10. The battery cell according to claim 9, wherein the film material further comprises: a filler layer (f), the filler layer (f) is located between the first plasticized barrier layer (b) and the metal barrier layer (a) and fills the weak region (a2), and/or the filler layer (f) is located between the second plasticized barrier layer (c) and the metal barrier layer (a) and configured to fill the weak region (a2).

11. The battery cell according to any one of claims 1 to 10, characterize in that the battery cell is any one of a lithium iron phosphate battery cell, a ternary lithium battery cell, and a solid-state battery cell.

12. The battery cell according to claim 11, characterize in that when the battery cell is a lithium iron phosphate battery cell, a ratio of an amount of a used positive electrode active material, an amount of a used positive electrode binder, and an amount of a used positive electrode conductive agent in a positive electrode material of the battery cell is 96:(1-3):(1-3); and when the battery cell is a ternary lithium battery cell, the ratio of the amount of the used positive electrode active material, the amount of the used positive electrode binder, and the amount of the used positive electrode conductive agent in the positive electrode material of the battery cell is 96:(2-3):(1-2).

13. A battery apparatus, comprising:
a box (400); and
a battery pack (500), wherein at least one battery pack (500) is provided, the battery pack (500) comprises: at least one battery cell according to any one of claims 1 to 12 and a covering shell (510), and at least one side surface of the covering shell (510) is provided with a pressure relief portion (520).

14. The battery apparatus according to claim 13, wherein the covering shell (510) comprises a first plate (511) and second plates (512) located on both sides of the first plate (511); the pressure relief portion (520) is formed on the first plate (511); and the pressure relief region (121) and the pressure relief portion (520) are at least partially opposite each other.

15. The battery apparatus according to claim 14, wherein the second plates (512) are opposite the side surface (11), and a contour area of a projection of the second plate (512) facing the side surface (11) of the flexible housing (10) is less than or equal to an area of the side surface (11).

16. The battery apparatus according to claim 14, wherein the first plate (511) is spaced apart from a side of the circumferential surface (12) with the weak portion (122), to define an exhaust passage (530).

17. The battery apparatus according to claim 14, wherein the first plate (511) is configured as a flat plate or an arc-shaped plate.

18. The battery apparatus according to claim 13, wherein multiple pressure relief portions (520) are provided, and the multiple pressure relief portions (520) are spaced apart in a length direction and/or width direction of the first plate (511).

19. The battery apparatus according to claim 13, wherein the covering shell (510) is configured as an aluminum shell or a stainless steel shell.

20. The battery apparatus according to claim 14, wherein the box (400) has a bottom plate (410), and the bottom plate (410) is connected to the battery cell through an adhesive layer (420).

21. The battery apparatus according to claim 20, wherein the bottom plate (410) comprises a cold plate, and the adhesive layer (420) is located between the cold plate and the multiple battery cells.

22. The battery apparatus according to claim 20, wherein the adhesive layer (420) comprises: an adhesive layer body (421) and an adhesive overflow portion (422); and the adhesive overflow portion (422) is located on a side of the adhesive layer body (421) facing the multiple battery cells and located between adjacent battery cells and/or between the battery cells and the second plates (512).

23. An electric device, comprising the battery apparatus according to any one of claims 13 to 22.

24. The electric device according to claim 23, **characterized in that** the electric device is a vehicle.

25. The electric device according to claim 23, **characterized in that** the battery apparatus is integrated into a chassis of the vehicle, and a top plate of the box (400) participates in defining a vehicle floor.
